# EUROPÄISCHE PATENTANMELDUNG

(11) **EP 4 851 587 A1**
(43) Veröffentlichungstag der Anmeldung: **09.12.2026**
(21) Anmeldenummer: 25180239.3
(22) Anmeldetag: 02.06.2025
(51) Int. Cl.: G01F 1/708, G01F 25/10

(54) **MESSSYSTEM ZUR BESTIMMUNG EINES STRÖMUNGSVERHALTENS EINES MEDIUMS IN EINER ROHRLEITUNG**

(71) Anmelder: i-spring Systems AG, 8618 Oetwil am See (CH)
(72) Erfinder: OURIEV, Boris, 9200 Gossau (CH)
(74) Vertreter: Weickmann & Weickmann PartmbB

(57) **Zusammenfassung**

Die vorliegende Erfindung betrifft ein Messsystem (10) zur Bestimmung zur Bestimmung eines Strömungsverhaltens eines Mediums in einer Rohrleitung (12), wobei das Messsystem (10) umfasst: wenigstens eine Rohrleitung (12), welche zum Transport eines Mediums eingerichtet ist; und wenigstens eine erste Messvorrichtung (32) und wenigstens eine zweite Messvorrichtung (52), welche jeweils wenigstens ein Sensorelement (34) und jeweils eine mit dem Sensorelement (34) elektrisch gekoppelte Leiterplatte (36) umfassen, wobei die erste Messvorrichtung (32) und die zweite Messvorrichtung (52) entlang einer Strömungsrichtung (X) des Mediums in der Rohrleitung (12) um einen vordefinierten Abstand (Y) voneinander beabstandet an einer Außenfläche eines ersten Rohrabschnitts (14) bzw. eines zweiten Rohrabschnitts (16) der Rohrleitung (12) angeordnet sind, wobei die erste Messvorrichtung (32) dazu eingerichtet ist, eine Dehnung des ersten Rohrabschnitts (14) zu detektieren, wobei die zweite Messvorrichtung (52) dazu eingerichtet ist, eine Dehnung des zweiten Rohrabschnitts (16) zu detektieren, und wobei das Messsystem (10) auf Grundlage der detektierten Dehnungen der ersten Messvorrichtung (32) und der zweiten Messvorrichtung (52) ein Strömungsverhalten des Mediums während dessen Transports durch die Rohrleitung (12) bestimmt. Ferner betrifft die Erfindung ein Verfahren zum Bestimmen eines Strömungsverhaltens eines Mediums in einer Rohrleitung (12).

## Beschreibung

Die vorliegende Erfindung betrifft ein Messsystem sowie ein Verfahren zur Bestimmung eines Strömungsverhaltens eines Mediums in einer Rohrleitung.

Herkömmliche Rohrleitungen werden sowohl im industriellen als auch im privaten Umfeld zahlreich verwendet. Beispiele hierfür sind Rohrleitungen zum Transport von Wasser, Wasserstoff oder Treibstoff, welche unter anderem in der Chemie-, Pharma- oder Lebensmittelindustrie zum Einsatz kommen. Hauptsächlich dienen sie dem Transport von Fluiden in Form von Flüssigkeiten und Gasen, können jedoch je nach Anwendungsfall auch zur Beförderung von riesel- oder pumpfähigen Feststoffen verwendet werden. Neben einem oder mehreren oft metallischen Rohren umfasst eine Rohrleitung üblicherweise auch Rohrverbindungen, Rohrhalterungssysteme und Rohrleitungskennzeichnungen sowie gegebenenfalls Armaturen, beispielsweise Pumpen, Ventile, Sperrklappen, Sicherheitsventile, Druckablässe, aktive Druckpulsationsdämpfer usw., und Dämmungen.

Die Ausgestaltung und Dimensionierung der einzelnen Komponenten einer Rohrleitung erfolgt in der Regel anwendungsspezifisch. Ein relevanter Faktor ist hierbei das Strömungsverhalten eines Mediums, d.h. eines Fluids, eines Feststoffs oder einer Mischung davon, während dessen Transport durch die Rohrleitung. Maßgeblich hierfür sind neben den chemisch-physikalischen Eigenschaften, insbesondere der Zusammensetzung und Dichte, des Mediums die materialspezifischen Eigenschaften der Rohrleitung. Vorliegend zählt hierzu das Material, der Innen- und Außendurchmesser bzw. die Wandstärke, die Form sowie das Querschnittsprofil der für den Transport des Mediums involvierten Komponenten der Rohrleitung.

Unter das Strömungsverhalten des Mediums fällt vorliegend dessen Volumenstrom und Strömungsgeschwindigkeit in der Rohrleitung sowie das Auftreten von Strömungsstörungen. Die Bestimmung dieser Parameter ist regelmäßig von großem Interesse, um Aussagen über den Durchfluss und schließlich die Effizienz einer Rohrleitung treffen zu können. Aus diesem Grund werden Rohrleitung insbesondere im industriellen Umfeld sensorisch überwacht. Hierfür sind verschiedene Messverfahren bekannt.

Herkömmliche Durchflussmesssysteme basieren üblicherweise auf Verfahren zur Bestimmung von Corioliskräften, Ultraschall sowie Druck oder auf elektromagnetisch-induktiven Verfahren. Derartige Messsysteme sind in der Regel auf die Bestimmung von Volumen- oder Massenstrom ausgelegt und erfordern entweder eine vollständige Integration in die Rohrleitung oder müssen zumindest in diese eingesetzt werden. Dadurch entsteht folglich ein Kontakt zwischen Sensorik und Medium, wodurch jedoch Strömungsstörungen verursacht werden können. Eine kontaktlose Ermittlung des Durchflusses ohne Beeinflussung der Rohrleitung oder des Strömungsverhaltens ist mit diesen Messsystemen meist nicht realisierbar.

Insbesondere bei nicht-newtonschen Medien - etwa viskoelastischen oder strukturviskosen Flüssigkeiten, hochkonzentrierten Dispersionen oder Fluiden mit Lufteinschlüssen - zeigen diese Messprinzipien erhebliche Schwächen. So führen strukturelle Veränderungen im Fluid, lokale Dichteschwankungen oder Blasendynamiken zu deutlichen Messabweichungen. Dies betrifft insbesondere Ultraschall- und induktive Verfahren, bei welchen die Ausbreitungsgeschwindigkeit der Messsignale stark von den Eigenschaften des transportierten Mediums abhängt. Fehler im Bereich von bis zu 20 % sind unter solchen Bedingungen nicht unüblich.

Coriolis-Sensoren liefern unter idealen Bedingungen zwar präzise Ergebnisse, sind jedoch äußerst empfindlich gegenüber Mehrphasenströmungen, insbesondere bei Luft- oder Gasanteilen. Zudem sind sie aus konstruktiven Gründen meist nicht für gerade Rohrabschnitte geeignet, was ihren Einbau in bestehende Rohrleitungen zusätzlich erschwert. Alternativ können unter Verwendung von Differenzdruck- oder Time-of-Flight-Korrelationen auch Drucksensoren zur Analyse des Strömungsverhaltens eines Mediums herangezogen werden. Solche Systeme stoßen jedoch aufgrund mehrerer technischer Limitierungen schnell an ihre Grenzen: Beim Einsatz von Druckübertragungsmembranen führen deren mechanische Eigenschaften, insbesondere deren Größe und Oberflächenprofil, sowie deren notwendige Einbringung in der Rohrleitung einerseits häufig zu Störungen des Strömungsverhaltens, wodurch Turbulenzen induziert werden können. Solche Turbulenzen wirken sich störend auf das Messverfahren aus. Andererseits limitiert die eingeschränkte Abtastrate konventioneller Drucksensoren die zeitliche Auflösung der Durchflussmessung. Auch ist die erforderliche Druckauflösung bei kleineren dynamischen Signalen oft nur durch starkes Oversampling erreichbar, wodurch das Messsystem träge und rauschanfällig wird.

Ferner sind Strömungsstörungen in den beschriebenen Durchflussmesssystemen in der Regel unerwünscht, da viele Sensoren für stationäre Strömungsbedingungen kalibriert sind. Druckpulsationen im niedrigen Frequenzbereich gelten daher als Störgrößen, obwohl sie in realen Rohrleitungssystemen praktisch unvermeidlich sind. Solche Druckpulsationen entstehen nicht nur durch oszillierende Pumpen, sondern ebenso durch konstruktive Merkmale wie Rohrbögen, Verzweigungen, Ventile, welche als Fließbarriere wirken, sowie asymmetrische Rohrleitungen. Ferner können auch Strömungsabrisse, Instabilitäten oder abrupte Beschleunigungsvorgänge während des Transports des Mediums zu Druckpulsationen führen. Diese Druckpulsationen können jedoch eine wertvolle Quelle für die Strömungsanalyse darstellen, sofern sie mit geeigneter Messtechnik genutzt werden.

Folglich besteht Bedarf an einem robusten und einfach integrierbaren Messsystem, welches ohne Medienkontakt präzise und zeitlich korrelierte Messungen erlaubt. Derartige Messungen sollten unabhängig von den Fluideigenschaften und ohne Beeinflussung des Strömungsverhaltens des Mediums während des Transports durch eine Rohrleitung durchführbar sein.

Es ist daher die Aufgabe der vorliegenden Erfindung, ein Messsystem bereitzustellen, welches eine kontaktlose Echtzeit-Bestimmung eines Strömungsverhaltens eines in einer Rohrleitung transportierten Mediums ermöglicht.

Diese Aufgabe wird erfindungsgemäß in einem ersten Aspekt durch ein Messsystem zur Bestimmung eines Strömungsverhaltens eines Mediums in einer Rohrleitung gelöst, wobei das Messsystem wenigstens eine Rohrleitung, welche zum Transport eines Mediums eingerichtet ist, und wenigstens eine erste Messvorrichtung und wenigstens eine zweite Messvorrichtung umfasst, welche jeweils wenigstens ein Sensorelement und jeweils eine mit dem Sensorelement elektrisch gekoppelte Leiterplatte umfassen, wobei die erste Messvorrichtung und die zweite Messvorrichtung entlang einer Strömungsrichtung des Mediums in der Rohrleitung um einen vordefinierten Abstand voneinander beabstandet an einer Außenfläche eines ersten Rohrabschnitts bzw. eines zweiten Rohrabschnitts der Rohrleitung angeordnet sind, wobei die erste Messvorrichtung dazu eingerichtet ist, eine Dehnung des ersten Rohrabschnitts zu detektieren, wobei die zweite Messvorrichtung dazu eingerichtet ist, eine Dehnung des zweiten Rohrabschnitts zu detektieren, und wobei das Messsystem auf Grundlage der detektierten Dehnungen der ersten Messvorrichtung und der zweiten Messvorrichtung ein Strömungsverhalten des Mediums während dessen Transports durch die Rohrleitung bestimmt.

Im Betrieb der Rohrleitung wird aufgrund eines zu transportierenden Mediums, d.h. eines Fluids oder eine Feststoffs, im Inneren des ersten und des zweiten Rohrabschnitts eines Rohres der Rohrleitung ein statischer oder dynamischer Druck erzeugt. Dieser Innendruck wirkt senkrecht auf die Rohrinnenwand und erzeugt bei Überschreitung eines materialspezifischen Schwellenwertes des jeweiligen Rohrabschnitts an der betroffenen Stelle des Rohrabschnitts eine Querschnittsveränderung in Form einer Dehnung bzw. einer Umfangsdehnung. Der materialspezifische Schwellenwert ist abhängig von den Materialeigenschaften, insbesondere Materialart, Querschnittsprofil, Wandstärke bzw. Innen- und Außendurchmesser sowie Elastizitätsmodul und Poisson-Zahl, eines Rohrabschnitts. So tritt beispielsweise eine Dehnung eines Rohrabschnitts in Folge eines erhöhten Innendrucks bei einem dünnwandigen Kunststoffrohr schneller ein als bei einem dickwandigen Edelstahlrohr.

Die Querschnittsveränderung entspricht in dem beschriebenen Fall einer Querschnittsvergrößerung und ist proportional zum aufgebrachten Innendruck. Die Querschnittsvergrößerung betrifft sowohl den Innendurchmesser als auch den Außendurchmesser des ersten und des zweiten Rohrabschnitts und kann daher auf der Außenfläche eines jeweiligen Rohrabschnitts gemessen werden. Nach Abfall des Innendrucks auf das ursprüngliche Ausgangsniveau reduziert sich der Querschnitt eines Rohrabschnitts in der Regel auf den ursprünglichen Durchmesser. Die messbaren Dehnungen eines Rohrabschnitts umfassen somit sowohl eine Querschnittsvergrößerung als auch eine Querschnittsverkleinerung.

Die erste und die zweite Messvorrichtung können baugleich und hinsichtlich ihrer Funktionalität identisch sein. Dementsprechend sind sämtliche Prinzipien, welche zuvor für die erste Messvorrichtung an sich sowie für die erste Messvorrichtung im Zusammenhang mit dem ersten Rohrabschnitt erläutert worden sind, auch auf die zweite Messvorrichtung bzw. auf die zweite Messvorrichtung im Zusammenhang mit dem zweiten Rohrabschnitt anwendbar, und umgekehrt. Die beiden Messvorrichtungen können zusätzlich zur Anbringung an einem Rohrabschnitt eines Rohres auch an strömungsrelevanten Komponenten einer Rohrleitung angebracht werden, beispielsweise an Regelventilen, Pumpen, Rohrbögen oder Abzweigungen.

Gemäß einem wichtigen Merkmal des ersten Aspekts der vorliegenden Erfindung sind die jeweils an einer Außenfläche eines Rohrabschnitts der Rohrleitung angebrachten Messvorrichtungen jeweils dazu eingerichtet, eine zeitpunktspezifische Dehnung eines Rohrabschnitts zu detektieren. Konkret können die erste und die zweite Messvorrichtung zeitpunktspezifische Dehnungsparameter bestimmen, welche auf einer detektierten Dehnung eines jeweiligen Rohrabschnitts beruhen und materialspezifische Eigenschaften des Rohrabschnitts, insbesondere Materialart, Querschnittsprofil, Wandstärke bzw. Innen- und Außendurchmesser sowie Elastizitätsmodul und Poisson-Zahl, einbeziehen. Vorzugsweise weisen die beiden Rohrabschnitte ein zylindrisches Querschnittsprofil auf, wobei auch andere Querschnittsprofile denkbar sind.

Da die beiden Messvorrichtungen an vordefinierten Positionen an der Rohrleitung beabstandet zueinander angeordnet sind, können über die zeitliche Differenz zwischen einer Detektion einer Dehnung durch die erste Messvorrichtung und einer Detektion einer Dehnung durch die zweite Messvorrichtung Informationen über das Strömungsverhalten, insbesondere die Strömungsgeschwindigkeit, des Mediums in der Rohrleitung abgeleitet werden. Im Detail detektiert die erste Messvorrichtung an einem ersten Zeitpunkt eine Dehnung des ersten Rohrabschnitts und bestimmt darauf basierend zeitpunktspezifische Dehnungsparameter. Aufgrund des Transports des Mediums durch die Rohrleitung tritt entsprechend zeitverzögert die entsprechende Dehnung auch am zweiten Rohrabschnitt auf, wo sie von der zweiten Messvorrichtung detektiert wird. Anhand der Zeitspanne zwischen dem Auftreten der Dehnung am ersten Rohrabschnitt und dem Auftreten der Dehnung am zweiten Rohrabschnitt kann folglich die Strömungsgeschwindigkeit des Mediums bestimmt werden. Hierfür wird insbesondere eine Time-of-Flight-Analyse durchgeführt, um das Strömungsverhalten des Mediums in Echtzeit zu analysieren.

Zur Durchführung der Bestimmung des Strömungsverhaltens des Mediums sind die beiden Messvorrichtungen insbesondere synchronisiert. Hierbei wird eine Synchronisationsgenauigkeit von unter 1 ns angestrebt. Dies kann unter anderem durch ein Funksignal, einen digitalen Auslöseimpuls oder einen Zeitstempel realisiert werden. Die Synchronisierung sowie die Auswertung und Analyse der bestimmten Dehnungsparameter kann von einer externen Steuereinheit des Messsystems durchgeführt werden, insbesondere einem Computer, einem Tablet oder einem Smartphone.

Zur Detektion der Dehnung eines Rohrabschnitts sind die beiden Messvorrichtungen insbesondere als Dehnungssensoren ausgebildet, welche jeweils mit eigenen Messgittern bereitgestellt sind. Anhand der Messgitter können Dehnungen dreidimensional und entlang unterschiedlicher Richtungen, insbesondere in bis zu drei Richtungen sowie axial, radial und/oder tangential, in Bezug auf die Haupterstreckungsrichtung eines Rohrabschnitts detektiert werden, wodurch eine Bestimmung von Strömungsgeschwindigkeiten und Strömungsrichtungen selbst für komplexe Fluideigenschaften ermöglicht wird, beispielsweise für viskoelastisches Verhalten, strukturviskose Strömungen oder bei Lufteinschlüssen im Medium.

Die beschriebene Vorgehensweise eignet sich zur Bestimmung des Strömungsverhaltens unterschiedlicher Medien, insbesondere unterschiedlicher Fluidarten, nämlich newtonische und nicht-newtonische, strukturviskose oder pastöse Fluide sowie Polymerlösungen, dilatante Suspensionen, Emulsionen und Schäume.

Ferner können die bestimmten Dehnungsparameter mit Referenzwerten, beispielsweise modellierten Referenzkurven, verglichen werden. Besagte Referenzwerte beziehen sich dabei auf die chemische-physikalischen Eigenschaften des Mediums sowie der materialspezifischen Eigenschaften der Rohrleitung, welche unter Standardbedingungen ermittelt worden sind. Werden nun Abweichungen zwischen den ermittelten Dehnungsparametern und den Referenzwerten ermittelt, so kann dies auf Leckagen oder Materialermüdung der Rohrleitung sowie auf Anomalien des Strömungsverhaltens des transportierten Mediums hinweisen.

Das erfindungsgemäße Messsystem hat insbesondere den Vorteil, dass die Bestimmung des Strömungsverhaltens des Mediums kontaktlos durchführbar ist, d.h. dass die beiden Messvorrichtungen keinen direkten Kontakt zum Medium benötigen. Daher entfällt im Vergleich zu einigen herkömmlichen Messsystemen die Notwendigkeit, die beiden Rohrabschnitte bearbeiten zu müssen, um einen Sensor in einen Rohrabschnitt einzusetzen. Ferner sind die beiden Messvorrichtungen aufgrund ihrer Anbringung an der Außenfläche eines Rohrabschnitts einfach und kostengünstig einsetzbar, da beispielsweise keine zusätzlichen Dichtungselemente für die Anbringung der Messvorrichtungen notwendig sind. Das erfindungsgemäße Messsystem kann dadurch ATEX, FDA, EHEDG oder GMP konform ausgebildet werden und dementsprechend unter anderem selbst in gefährlichen Bereichen, d.h. in Bereichen, in welchen explosionsfähige Atmosphären auftreten können, und in der Pharma- sowie in der Lebensmittelindustrie eingesetzt werden.

Die Messvorrichtungen sind außerdem aufgrund ihrer Anbringung an der Außenfläche im Vergleich zu eingebauten Drucksensoren einfach zu erreichen, was insbesondere im Fall einer Wartung von Vorteil ist. Schließlich benötigen die Messvorrichtung des erfindungsgemäßen Messsystems keinen direkten Kontakt zum transportierten Fluid. Dadurch werden Messfehler eliminiert, welche in herkömmlichen Messsystemen durch Lufteinschlüsse bzw. Blasenbildung, Schmutz, Turbulenz oder Trägheit von Membranen entstehen können. Darüber hinaus ist das Messsystem immun gegenüber fluiddynamischen Störungen und bietet somit eine stabile und wiederholbare Möglichkeit zur Bestimmung des Strömungsverhaltens des Mediums.

Insbesondere kann das erfindungsgemäße Messsystem mittels der bestimmten Dehnungsparameter der ersten und der zweiten Messvorrichtung eine Prognose zum Strömungsverhalten des Mediums während des fortlaufenden Transports durch die Rohrleitung erstellen. Eine solche Prognose kann sich beispielsweise auf eine zu erwartende Strömungsgeschwindigkeit bei störungsfreiem Transport durch die Rohrleitung beziehen. Anhand der Prognose zum Strömungsverhalten des Mediums können anschließend Rückschlüsse zum Durchsatz und somit zur Effizienz einer Rohrleitung gewonnen werden.

An dieser Stelle sei angemerkt, dass das erfindungsgemäße Messsystem neben Rohren bzw. Rohrabschnitten einer Rohrleitung auch an Schläuchen anbringbar und analog zur beschriebenen Vorgehensweise zur Bestimmung eines Strömungsverhaltens eines Mediums in einem Schlauch einsetzbar ist.

Gemäß einer bevorzugten Ausführungsform des erfindungsgemäßen Messsystems kann das Sensorelement wenigstens einen Dehnungsmessstreifen (DMS) umfassen. Der DMS kann an einer beliebigen Stelle auf der Außenfläche eines Rohrabschnitts angebracht werden, insbesondere geklebt, um die Querschnittsveränderungen bzw. Dehnungen des jeweiligen Rohrabschnitts zu detektieren. DMS sind vorteilhafterweise kostengünstig, langlebig und müssen im Vergleich zu rein elektrisch betriebenen Sensoren seltener gewartet werden. Bei dem DMS kann es sich um einen keramischen DMS, einen Standard-Folien-DMS oder eine Kombination davon handeln. Ein keramischer DMS eignet sich insbesondere dann, wenn eine hohe Frequenzantwort oder erhöhte Empfindlichkeit gegenüber kleinen Druckänderungen erforderlich ist. Dessen hoher Dehnungsempfindlichkeitskoeffizient, welcher auch als Gauge-Faktor bezeichnet wird, erlaubt eine präzise Detektion selbst kleinster Dehnungen und ist somit dazu in der Lage, relativ niedrige Dehnungsunterschiede zu detektieren.

Der DMS der beiden Messvorrichtungen ist über wenigstens eine Messbrücke, insbesondere eine Wheatstone'sche Messbrücke, mit der Leiterplatte einer jeweiligen Messvorrichtung gekoppelt, um die von dem DMS erfassten Dehnungen in elektrische Signale umzuwandeln, aus welchen schließlich die Dehnungsparameter bestimmt werden können.

Insbesondere kann das Sensorelement eine Mehrzahl von DMS, vorzugsweise drei DMS, umfassen, wobei die DMS der Mehrzahl von DMS derart in dem Sensorelement angeordnet sind, dass jeweils zwei benachbarte DMS in Bezug auf deren Haupterstreckungsrichtungen einen Winkel zueinander aufspannen, um Querschnittsveränderung eines jeweiligen Rohrabschnitts in voneinander unterschiedlichen Richtungen gemäß den Haupterstreckungsrichtungen der DMS zu detektieren. Besagter Winkel beträgt zwischen 0° und 180°. Die Haupterstreckungsrichtung eines DMS bezieht sich dabei auf seine Anordnung auf der Außenfläche des Rohrabschnitts. Die vorzugsweise drei DMS bilden in der beschriebenen Konstellation eine sogenannte DMS-Rosette, welche die Detektion von Dehnungen bzw. Querschnittsveränderungen in unterschiedlichen Richtungen am ersten Rohrabschnitt und somit eine dreidimensionale Dehnungsmessung ermöglicht. Jeder einzelne DMS liefert Messsignale, welche charakteristisch für die Anordnungsrichtung des jeweiligen DMS sind. Es ist ebenfalls denkbar, dass eine Mehrzahl einzelner DMS oder eine Mehrzahl von DMS-Rosetten, welche auf der Außenfläche des ersten und/oder des zweiten Rohrabschnitts beabstandet angeordnet sind, von einer ersten und/oder einer zweiten Messvorrichtung umfasst sind.

Gemäß einer bevorzugten Ausführungsform des erfindungsgemäßen Messsystems können die erste und die zweite Messvorrichtung anhand vordefinierter Druckwerte und auf Grundlage materialspezifischer Eigenschaften des ersten bzw. des zweiten Rohrabschnitts kalibriert sein. Zur Kalibrierung der Messvorrichtungen wird ein insbesondere mehrstufiger Drucktest durchgeführt, bei welchem vordefinierte Innendruckwerte, welche sich in einem zulässigen Druckbereich bewegen, an der Rohrleitung angelegt werden. Die vordefinierten Innendruckwerte basieren dabei auf den materialspezifischen Eigenschaften des jeweiligen Rohrabschnitts sowie auf einem vordefinierten Volumenstrom des Mediums in der Rohrleitung.

Die aus dem Drucktest resultierenden Umfangsdehnungen der beiden Rohrabschnitte werden von den Messvorrichtungen detektiert und jeweils darauf basierend Dehnungsparameter bestimmt, wie zuvor beschrieben. Die gemessenen Dehnungsparameter werden anschließend mittels polynomieller Regressionsverfahren, beispielsweise durch ein Polynom zweiter oder dritter Ordnung bzw. ein sogenanntes Kraft-Dehnungs-Displacement-Polynom, mit den bekannten, vordefinierten Innendruckwerten in Beziehung gesetzt. Daraus entsteht ein Kalibriermodell, welches auf spezifischen Materialeigenschaften und Geometrieparametern der Rohrleitung basiert. Das Kalibriermodell kann ferner Umgebungsbedingungen, insbesondere die Temperatur eines Rohrabschnitts sowie eine Umgebungstemperatur berücksichtigen. Eine Kalibrierung einer Messvorrichtung ist zu einem beliebigen Zeitpunkt möglich, insbesondere wird sie jedoch unmittelbar nach dem Anbringen der Messvorrichtung an einem Rohrabschnitt durchgeführt.

Des Weiteren kann vor der Anbringung der ersten sowie der zweiten Messvorrichtung an einer Außenfläche des ersten und des zweiten Rohrabschnitts eine Analyse durchgeführt werden, um eine für die Anbringung der jeweiligen Messvorrichtung geeignete Position an der Rohrleitung zu bestimmen. Diese Vorab-Analyse dient zur optimalen Positionierung einer Messvorrichtung am entsprechenden Rohrabschnitt und kann simulationsgestützt mittels Finite-Element-Methode (FEM) durchgeführt werden, um Regionen mit maximaler Dehnung bei vordefinierten Innendruckwerten zu identifizieren. Dabei werden sowohl statische als auch dynamische Belastungen, Materialeigenschaften und Eigenfrequenzen sowie sich daraus ergebende Resonanzknoten entlang der Rohrleitung berücksichtig, um eine Position an einem Rohrabschnitt mit maximaler Empfindlichkeit und Störfestigkeit bei der Dehnungsdetektion zu identifizieren.

Um die Synchronisierung der beiden Messvorrichtungen zu vereinfachen und um eine Datenübertragung der bestimmten Dehnungsparameter zu ermöglichen, können die erste Messvorrichtung und die zweite Messvorrichtung über eine Drahtverbindung gekoppelt sein. Die Drahtverbindung kann zumindest teilweise als flexible Leiterplatte ausgebildet sein. In diesem Fall bildet die Leiterplatte der ersten Messvorrichtung zusammen mit der Leiterplatte der zweiten Messvorrichtung die Drahtverbindung. Es ist denkbar, dass sämtliche oder zumindest einige der hierin beschriebenen Sensoren bzw. Sensorelemente entlang dieser Drahtverbindung angeordnet sind. Aufgrund der flexiblen Ausbildung der Drahtverbindung können somit innerhalb eines erfindungsgemäßen Messsystems Sensoren bzw. Sensorelemente je nach gewünschter Position an den Außenflächen der Rohrabschnitte angeordnet werden. Optional kann die Drahtverbindung in ein Kabel eingebettet sein, welches die Drahtverbindung schützt und ferner selbst größere Distanzen überbrücken sowie flexibel entlang an den Außenflächen der Rohrabschnitte geführt werden kann. Da eine präzise Synchronisierung der beiden Messvorrichtungen für die Durchführung einer Time-of-Flight-Analyse von hoher Relevanz ist, kann eine solche Drahtverbindung gegenüber einer drahtlosen Synchronisierung bevorzugt sein. Ferner kann die Drahtverbindung dazu eingerichtet sein, eine Energieversorgung der zweiten Messvorrichtung durch die erste Messvorrichtung zu gewährleisten, oder umgekehrt.

Gemäß einer weiteren Ausführungsform des erfindungsgemäßen Messsystems können die erste Messvorrichtung und/oder die zweite Messvorrichtung ferner einen Beschleunigungssensor und/oder einen Temperatursensor umfassen. Der Beschleunigungssensor ist insbesondere dazu eingerichtet, im jeweiligen Rohrabschnitt auftretende Druckpulsationen zu detektieren, wodurch eine Strömungsanalyse in einer Rohrleitung ermöglicht wird. Dabei können dreidimensionale Beschleunigungsdaten erfasst werden, um innerhalb eines sich dehnenden Rohrabschnitts Aussagen über dynamische Druckpulsationen treffen zu können. Die durch die jeweilige Messvorrichtung bestimmten Dehnungsparameter können durch Beschleunigungsparameter, welche von dem Beschleunigungssensor bestimmt worden sind, dynamisch verstärkt aufgelöst werden, um insbesondere Druckspitzen mit höherer Präzision zu erfassen.

Ferner dient der Beschleunigungssensor dazu, zwischen realen Querschnittsveränderungen eines Rohrabschnitts und extern verursachten Bewegungen, beispielsweise Schwingungen, Stößen oder Pumpenresonanzen, welche allesamt nicht auf eine durch das Medium induzierte Dehnung des Rohrabschnitts zurückzuführen sind, unterscheiden zu können. Der Beschleunigungssensor ermöglicht eine Echtzeit-Analyse der Umgebungsdynamik des jeweiligen Rohrabschnitts und ermöglicht die Differenzierung zwischen druckinduzierten und mechanisch-induzierten Deformationen.

Der Beschleunigungssensor kann ferner entweder direkt auf der Außenfläche eines Rohrabschnitts oder in eine polymere Zwischenschicht, beispielsweise aus Polyurethan, eingebettet sein, welche auf die Außenfläche des Rohrabschnitts aufgeklebt ist. Zusätzlich kann der Beschleunigungssensor mit einer vordefinierten Zusatzmasse gekoppelt sein, um eine gezielte mechanische Entkopplung von hochfrequenten Vibrationen des Rohrabschnitts zu ermöglichen.

Durch eine gezielte Abstimmung des Elastizitätsmoduls und der Federkonstante der polymeren Zwischenschicht sowie der bekannten Zusatzmasse ergibt sich ein Zwei-Massen-Schwingungssystem, welches zur Detektion niederfrequenter und/oder niederamplituder mechanischer Schwingungen dient. Mittels einer später beschriebenen Korrekturfunktion können dabei die dynamischen Eigenschaften des Entkopplungssystems zur präzisen Bestimmung der lokalen Beschleunigung oder Schwingungsübertragung berücksichtigt werden.

Ferner kann zur Bestimmung einer Umgebungstemperatur und/oder einer Temperatur des ersten bzw. des zweiten Rohrabschnitts vorgesehen sein. Sowohl der Beschleunigungssensor als auch der Temperatursensor können als mikro-elektromechanisches System (MEMS) ausgebildet sein, um die Umgebungsbedingungen des Messsystems zu erfassen.

Optional sind die erste und/oder zweite Messvorrichtung des erfindungsgemäßen Messsystems energieautark, d.h. sie versorgen sich eigenständig mit der für ihren Betrieb benötigten Energie. Daher kann die jeweilige Messvorrichtung Mittel zur autarken Energieversorgung aufweisen. Solche Mittel werden allgemein als Energy-Harvesting-Vorrichtungen bezeichnet. Die Mittel zur autarken Energieversorgung können unmittelbar auf dem ersten und/oder dem zweiten Rohrabschnitt angeordnet sein. Diese Mittel zur autarken Energieversorgung liefern der Messvorrichtung Energie in Form von Strom, um dessen dauerhaften Betrieb zu gewährleisten. Dazu nutzen die Mittel zur autarken Energieversorgung insbesondere piezoelektrische, elektromagnetische oder triboelektrische Prinzipien, um Energie aus den Dehnungen des jeweiligen Rohrabschnitts zu gewinnen. Zusätzlich oder alternativ kann die Messvorrichtung eine Batterie und/oder eine externe Energieversorgung aufweisen. Im Falle der Verwendung einer Batterie kann diese durch die von den Mitteln zur autarken Energieversorgung bereitgestellten Energie aufgeladen werden.

Gemäß einer optionalen Ausführungsform des erfindungsgemäßen Messsystems können die erste Messvorrichtung und/oder die zweite Messvorrichtung in jeweils einem Gehäuse ausgebildet sein, wobei das Gehäuse dazu eingerichtet ist, eine Dehnung der jeweiligen Messvorrichtung, welche diese aufgrund einer Dehnung des ersten Rohrabschnitts bzw. des zweiten Rohrabschnitts erfährt, auf einen vordefinierten Maximalwert zu begrenzen. Das Gehäuse kann dazu eine jeweilige Messvorrichtung aufnehmen und derart ausgebildet sein, dass eine vordefinierte Maximaldehnung der Messvorrichtungen nicht überschritten wird. Solch eine Maximaldehnung kann beispielsweise bei 5000 Microstrain liegen. Es handelt sich folglich um eine strukturelle Begrenzung der Messvorrichtungen, um diese vor Überbelastung zu schützen. Das Gehäuse kann hierfür als Überwurfring, Gewebemanschette oder steife Klemmeinheit bereitgestellt sein, welche eine radiale Expansion einer Messvorrichtung ab einem vordefinierten Innendruck eines Rohrabschnitts begrenzt und dadurch sowohl eine Beschädigung des DMS verhindert als auch die Wiederholbarkeit und Linearität der Messung sicherstellt.

Zusätzlich dient das Gehäuse als mechanischer Kompensator zur Querschnittsstabilisierung bei Verwendung des erfindungsgemäßen Messsystems auf flexiblen Schläuchen oder Kunststoffleitungen. Dabei gleicht das Gehäuse insbesondere asymmetrische Wandverstärkungen, lokale Biegungen oder ungleichmäßige Belastungsverteilungen aus und gewährleistet eine normierte und reproduzierbare Dehnungsverteilung einer Messvorrichtung. Das Gehäuse kann ferner dazu eingerichtet sein, die Messvorrichtung vor dem Eindringen von Flüssigkeiten oder Staub zu schützen.

Schließlich kann das Gehäuse auch zur Anbringung einer Messvorrichtung an der Außenfläche ausgebildet sein, beispielsweise indem die Messvorrichtung mittels des Gehäuses an einen Rohrabschnitt geklemmt oder gespannt wird. Dieses Vorgehen ist insbesondere geeignet für Anwendungen, bei welche ein Verkleben des Sensorelements nicht praktikabel oder zulässig ist, beispielsweise bei flexiblen Kunststoffrohren oder Silikonschläuchen. Ferner ist diese Anordnungsmöglichkeit vorteilhaft bei Anwendungen, welche eine zerstörungsfreie Montage und Demontage einer Messvorrichtung ohne Eingriff in die Rohrleitung voraussetzt. Sie eignet sich daher insbesondere für temporäre Messungen, bei Anwendungen im Hygienebereich oder in Anlagen mit häufig auszutauschenden Rohrabschnitten bzw. wechselnden Konfigurationen.

Gemäß einer optionalen Ausführungsform des erfindungsgemäßen Messsystems können die erste Messvorrichtung und/oder die zweite Messvorrichtung ferner eine Verarbeitungseinheit zur Verarbeitung von Dehnungsparametern, welche durch die Messvorrichtungen bestimmt worden sind, eine Speichereinheit, welche dazu eingerichtet ist, die bestimmten Dehnungsparameter abzuspeichern, und eine Kommunikationseinheit zum, insbesondere drahtlosen, Übertragen der Dehnungsparameter an eine externe Steuereinheit umfassen. Insbesondere können die beiden Messvorrichtungen mit jeweils einem Prozessor ausgebildet sein, welcher die Verarbeitungseinheit, die Speichereinheit und die Kommunikationseinheit umfasst. Insbesondere im zuvor beschriebenen Fall einer Drahtverbindung zwischen den beiden Messvorrichtungen, kann es ausreichend sein, die Verarbeitungseinheit, die Speichereinheit und die Kommunikationseinheit lediglich auf einer der beiden Messvorrichtungen bereitzustellen.

Die von den Messvorrichtungen bestimmten Dehnungsparameter können im Anschluss an deren Verarbeitung entweder ereignisbasiert oder zyklisch, d.h. in bestimmten Zeitintervallen, an eine externe Steuereinheit des Messsystems übertragen werden, beispielsweise ein PC, ein Smartphone oder ein Tablet, auf welcher sie ein Operateur einsehen kann, wobei die Steuereinheit anhand der übertragenen Dehnungsparameter auch autonom Änderungen am Messsystem vornehmen kann. Denkbar ist auch eine Sensor-Mesh-Funktion der Kommunikationseinheit zur präzisen Zeitreferenzierung. Die externe Steuereinheit kann ferner dazu eingerichtet sein, Steuerbefehle an eine Messvorrichtung zu übermitteln. Die aus dem Kalibrierungsvorgang, der Vorab-Analyse und einer im weiteren Verlauf beschriebenen Temperaturkompensation gewonnen Daten können in diesem Zusammenhang automatisch durch den Prozessor einer jeweiligen Messvorrichtung oder durch die externe Steuereinheit verarbeitet werden.

Ferner kann die externe Steuereinheit die zuvor beschriebene Synchronisierung der Messvorrichtungen vornehmen. Dadurch kann die Datenerfassung der Messvorrichtungen über vorbestimmte Messintervalle zeitgleich ablaufen, sodass Anomalien im Dehnungsverhalten, welche von den Messvorrichtungen detektiert werden, präzise zugeordnet werden können. Solche Anomalien betreffen beispielsweise Druckabfälle, Turbulenzen sowie Systemengpässe oder Verschmutzungen im Inneren eines Rohrabschnitts. Das Synchronisieren der Datenerfassung vereinfacht ferner auch die nachgelagerte Analyse der über einen längeren Zeitraum bestimmten Dehnungsparameter des jeweiligen Rohrabschnitts. Sämtliche Datenübertragungen können dabei drahtlos erfolgen, beispielsweise via Bluetooth oder über WLAN. Zusätzlich können die ermittelten Dehnungsparameter sowie sämtliche damit assoziierten Daten an eine Cloud bzw. einen entfernten Server übertragen werden.

Die detektierten Dehnungen des ersten und des zweiten Rohrabschnitts können durch das Messsystem, insbesondere durch die externe Steuereinheit des Messsystems, mittels Fast-Fourier-Transformation (FFT) und/oder Rainflow-Zählung verarbeitet werden. Die Anwendung von FFT ermöglicht unter anderem eine Frequenzanalyse von Druckpulsationen, während Rainflow-Zählung zur Ermüdungsanalyse der Rohrleitung dient. Die Verarbeitung der Dehnungsparameter ermöglicht ferner die Analyse zeitlicher Verzögerungen zwischen den beiden Messvorrichtungen sowie Amplitudenverläufe detektierter Druckpulsationen.

Gemäß einer bevorzugten Ausführungsform des erfindungsgemäßen Messsystems kann das Messsystem ferner eine Steuereinheit umfassen, welche dazu eingerichtet ist, durch die Messvorrichtungen bestimmte Dehnungsparameter auf Grundlage rheologischer Referenzwerte des transportierten Mediums anzupassen. Besagte rheologische Referenzwerte beziehen sich dabei insbesondere auf das Strömungs- bzw. Fließverhalten des Mediums während des Transports durch eine Rohrleitung. Durch Einbezug der rheologischen Referenzwerte kann gegebenenfalls eine Korrektur des anhand der Dehnungsparameter bestimmten Strömungsverhaltens des Mediums vorgenommen werden. Insbesondere kann ein entsprechend angepasstes, nicht-parabolisches Geschwindigkeitsprofil abgeleitet werden. Dieses wird mit einem modellierten Druckabfall entlang der beiden Rohrabschnitte gekoppelt, um die reale mittlere Strömungsgeschwindigkeit des Mediums präziser bestimmen zu können. Dabei wird im Falle eines ursprünglich angenommenen parabolische Profils, welches auf gemessenen mittleren Durchflussraten basiert, in Abhängigkeit von einer rheologisch bedingten Strömungsgeschwindigkeitsverteilung im Querschnitt der Rohrabschnitte korrigiert, wodurch eine verbesserte Berechnung des tatsächlichen Volumendurchsatzes oder des Volumenstroms ermöglicht wird.

Ferner kann die Integration von künstlicher Intelligenz im Zusammenhang mit dem erfindungsgemäßen Messsystem vorgesehen sein. Daher kann das Messsystem in einer bevorzugten Ausführungsform eine Einheit zum maschinellen Lernen umfassen, welche eingerichtet ist, zum Erfassen von Daten auf Grundlage von Dehnungsparametern des ersten Rohrabschnitts und/oder des zweiten Rohrabschnitts, welche durch eine jeweilige Messvorrichtung detektiert worden sind, materialspezifischer Eigenschaften des ersten Rohrabschnitts und/oder des zweiten Rohrabschnitts sowie vorbestimmter Eigenschaften des transportierten Mediums, Umwandeln der erfassten Daten in Training-Datensets, Erstellen einer Prognose zum Strömungsverhalten des Mediums in der Rohrleitung (12) auf Grundlage der Training-Datensets und Identifizieren von Abweichungen des bestimmten Strömungsverhaltens von einem auf Grundlage der Training-Datensets zu erwartenden Strömungsverhalten.

Die Einheit zum maschinellen Lernen kann insbesondere ein künstliches neuronales Netzwerk, beispielsweise ein konvolutionales bzw. faltendes neuronales Netzwerk umfassen. Dieses neuronale Netzwerk kann derart gesteuert werden, beispielsweise durch die zuvor erwähnte Steuereinheit des Messsystems, dass es auf Grundlage von Eingabedaten eine Prognose zum Strömungsverhalten des Mediums erstellt und Abweichungen des zuvor bestimmten, tatsächlichen Strömungsverhaltens des Mediums von einem Strömungsverhalten identifiziert, welches im Hinblick auf die vorliegenden materialspezifischen Eigenschaften des ersten bzw. des zweiten Rohrabschnitts sowie vorbestimmter Eigenschaften des Mediums zu erwarten wäre. Dazu kann die Einheit zum maschinellen Lernen mit den anderen Komponenten des Messsystems, insbesondere mit sämtlichen Messvorrichtungen elektrisch gekoppelt sein. Die Einheit zum maschinellen Lernen kann als Teil einer Messvorrichtung ausgebildet sein oder Teil der externen Steuereinheit sein.

Die Eingabedaten indizieren sowohl vorbestimmte als auch durch die Messvorrichtungen bestimmte Dehnungsparameter. Bei der Einheit zum maschinellen Lernen kann es sich um eine software-basierte Einheit handeln, welche durch einen Prozessor ausführbar ist.

Die Einheit zum maschinellen Lernen kann über einen andauernden Zeitraum, beispielsweise über mehrere Jahre hinweg, unter Verwendung von Training-Datensets als Eingabedaten trainiert werden. Die Training-Datensets werden hierzu in die Einheit zum maschinellen Lernen eingegeben oder von der Einheit zum maschinellen Lernen automatisch abgerufen. Neben der Möglichkeit zur Erzeugung von Training-Datensets durch Umwandlung erfasster Daten auf Grundlage von Dehnungsparametern können die Training-Datensets auch auf historischen Daten beruhen, welche sich auf das erfindungsgemäße Messsystem beziehen. So kann die Einheit zum maschinellen Lernen anhand erfasster Daten aus bereits vergangenen Bestimmungen eines Strömungsverhaltens eines Mediums trainiert werden.

Zusätzlich können die Training-Datensets erste Hilfsdaten einbeziehen, welche teilweise oder vollständig auf theoretischen Daten beruhen und durch eine qualifizierte Fachperson definiert worden sind. Derartige theoretische Daten können unter anderem physikalische Grundlagen zum Dehnungsverhalten der beiden Rohrabschnitte oder zu dem Sensorelement umfassen, insbesondere zu dem oder den DMS. Ferner können für die Training-Datensets zweite Hilfsdaten einbezogen werden, welche beispielsweise Informationen zur Art und Beschaffenheit der Komponenten einer Rohrleitung sowie Umgebungsinformationen umfassen, z.B. Temperatur, Druck, Luftfeuchtigkeit, Ort, Zeit und Datum.

Darüber hinaus können die Training-Datensets eine Gewichtung spezifischer, darin umfasster Daten aufweisen. Dazu kann ein Gewichtungsfaktor vorgesehen sein, welcher eine Wertung einer Korrelation zwischen den erfassten bzw. historischen Daten sowie den ersten und zweiten Hilfsdaten indiziert. Der Gewichtungsfaktor kann insbesondere einen Wertungsbereich repräsentieren, welcher von einer niedrigen zu einer hohen Wertung der jeweiligen Daten reicht.

Das Training der Einheit zum maschinellen Lernen ist darauf ausgelegt, einen gegenwärtigen oder zukünftigen Betrieb einer Rohrleitung zu optimieren, indem das Strömungsverhalten und insbesondere die Strömungsgeschwindigkeit eines darin transportierten Mediums präzise bestimmt wird und Abweichungen vom erwünschten Strömungsverhalten identifiziert werden. Gezielt kann dadurch die Art, Position und Relevanz einer solchen Abweichung automatisch ermittelt werden. Dies kann sich sowohl auf einen vollautomatischen als auch auf einen halbautomatischen bzw. durch einen Operateur gesteuerten Betrieb der Rohrleitung beziehen. Es ist ebenfalls denkbar, dass die Einheit zum maschinellen Lernen oder eine damit verknüpfte Steuereinheit Vorschläge zum Steuern eines Volumenstroms des Mediums in der Rohrleitung ausgibt, um einen Operateur beim Steuern des Volumenstroms zu unterstützen. Ferner ist die Einheit zum maschinellen Lernen dazu in der Lage, ausgehend von bekannten Parametern Prognosen zum Strömungsverhalten des Mediums zu erstellen, wie zuvor beschrieben. Insbesondere kann die Einheit zum maschinellen Lernen dabei Einflussfaktoren auf das Strömungsverhalten berücksichtigen, beispielsweise im Falle einer Leckage der Rohrleitung.

Nachdem die Einheit zum maschinellen Lernen unter Berücksichtigung der zuvor erläuterten Prinzipien mit einer ausreichend hohen Anzahl an Training-Datensets trainiert worden ist, kann die Einheit zum maschinellen Lernen auf Grundlage sogenannter ungesehener Daten Steuerbefehle zum Steuern eines Volumenstroms des Mediums der Rohrleitung erzeugen. Bei den ungesehenen Daten handelt es sich in diesem Zusammenhang um konkrete Datenwerte oder Parameter, insbesondere Dehnungsparameter, Materialeigenschaften der Rohrabschnitte und vorbestimmte Eigenschaften des transportierten Mediums, welche die Einheit zum maschinellen Lernen bisher nicht aus den trainierten Training-Datensets kennt.

Ferner kann die Einheit zum maschinellen Lernen auf Grundlage der Training-Datensets sowie nach ausreichendem Training auf Grundlage ungesehener Daten eine Prognose zum Strömungsverhalten des Mediums in der Rohrleitung erzeugen. Unter einer Prognose ist in diesem Zusammenhang eine Vorhersage eines bestimmten Verhaltens oder bestimmter Eigenschaften über einen spezifischen Zeitraum zu verstehen. So kann die Einheit zum maschinellen Lernen beispielsweise anhand aktueller erfasster Daten vorhersagen, welches Strömungsverhalten zu erwarten ist. Durch diese Prognosen kann die Steuerung des Volumenstroms optimiert werden, um eine erwünschte Durchflusseffizienz der Rohrleitung zu erreichen.

Gemäß einer weiteren Ausführungsform des erfindungsgemäßen Messsystems kann eine Mehrzahl von Messvorrichtungen in vordefinierten Abständen entlang der Strömungsrichtung des Mediums an der Rohrleitung angeordnet sein, um sich entlang der Strömungsrichtung des Mediums fortbewegende Druckpulsationen zu detektieren. Durch die Anordnung einer Mehrzahl von Messvorrichtungen ist das Messsystem dazu in der Lage, sich entlang der Strömungsrichtung des Mediums fortbewegende Druckpulsationen an mehreren, vordefinierten Messstellen zu erfassen und hinsichtlich ihrer Amplitudenveränderung, zeitlichen Streuung und Dämpfung auszuwerten. Wird nun die gemessene Dämpfung mit einer theoretisch zu erwartenden Signalabschwächung entlang der Strömungsrichtung verglichen, so lassen sich Abweichungen identifizieren, welche auf Leckagen oder andere Anomalien an der Rohrleitung hinweisen. Derartige Druckpulsationen lassen sich insbesondere mittels des Beschleunigungssensors der ersten und der zweiten Messvorrichtung detektieren. Im erfindungsgemäßen Messsystem kann eine Mehrzahl von Messvorrichtungen miteinander synchronisiert sein, insbesondere bis zu drei Messvorrichtungen, wodurch die zeitgleiche Detektion von Dehnungen an mehreren Rohrabschnitten ermöglicht wird. Die Mehrzahl der Messvorrichtungen kann dabei entlang einer Rohrleitung in Strömungsrichtung oder entgegen der Strömungsrichtung des Mediums angeordnet sein.

Je nach Ausgestaltung und Oberflächenstruktur des ersten und des zweiten Rohrabschnitts kann es wünschenswert sein, zumindest das Sensorelement einer jeweiligen Messvorrichtung anzupassen. Daher kann das Sensorelement zur Anordnung auf der Außenfläche eines Rohrabschnitts gemäß einer optionalen Ausführungsform als Folie ausgebildet, mit einem keramischen Substrat beschichtet, metallisiert und in eine Glasschicht eingebettet oder direkt auf die Außenfläche aufgedruckt sein.

Durch Ausbildung als insbesondere flexible Folie kann das Sensorelement in engem Kontakt auf der Außenfläche des Rohrabschnitts angeordnet werden, was im Falle einer gekrümmten oder unebenen Oberfläche des Rohrabschnitts vorteilhaft ist. Bei Verwendung eines oder mehrerer DMS können diese innerhalb der Folie entsprechend einem Messgitter, gegebenenfalls mit unterschiedlichen Ausrichtungen, in vordefinierten Richtungen in der Folie integriert sein. So kann ein DMS beispielsweise einen Winkel von 0°, 45° oder 90° relativ zur Haupterstreckungsrichtung eines jeweiligen Rohrabschnitts aufspannen. Eine keramische Beschichtung des Sensorelements, beispielsweise in Form eines Aluminiumoxid-Substrats, kann vorgenommen werden, wenn eine Anwendung der Messvorrichtung bei hohen Temperaturen und/oder eine korrodierte Außenfläche des Rohrabschnitts vorliegt. Die Ausbildung des Sensorelements als metallisierte Struktur auf einer Glasschicht dient - wie die zuvor beschriebene Bereitstellung eines keramischen Substrats - zum Schutz des Sensorelements. In diesem Fall kann das Sensorelement in Form von Dünnschicht-Leitern durch Sputtern oder Siebdruck auf der Außenfläche des Rohrabschnitts aufgebracht werden. Schließlich besteht die Option, das Sensorelement direkt auf die Außenfläche aufzudrucken, beispielsweise mittels Inkjet-Verfahren oder mittels Laserstrukturierung. Dabei wird ein Messgitter auf der Außenfläche erzeugt, welches wie zuvor beschrieben eine spezifische Anordnung des Sensorelements ermöglicht. Diese Anordnungsmöglichkeiten sind allesamt derart angepasst, dass die Detektion einer Querschnittsveränderung des ersten Rohrabschnitts durch die Messvorrichtung nicht negativ beeinträchtigt wird.

Optional können die erste und die zweite Messvorrichtung jeweils eine Temperaturkompensationseinheit umfassen, wobei die Temperaturkompensationseinheit dazu eingerichtet ist, eine Temperatur eines jeweiligen Rohrabschnitts zu detektieren. Die Temperaturkompensationseinheit dient insbesondere dazu, thermisch bedingte Längenausdehnungen des Rohrabschnitts sowie eine Temperatur der Außenfläche des Rohrabschnitts zu ermitteln, um anhand der gewonnenen Daten eine temperaturspezifische Korrektur der durch die jeweilige Messvorrichtung ermittelten Dehnungsparameter durchzuführen. Eine derartige Temperaturkompensation ist vorteilhaft, da die Detektion von Querschnittsveränderungen durch einen DMS temperatursensitiv ist. Hierfür kann die Temperaturkompensationseinheit ferner dazu eingerichtet sein, die Temperatur des Sensorelements zu detektieren und zu überwachen. Sollte die Temperatur des Rohrabschnitts und/oder des Sensorelements außerhalb eines vorbestimmten Temperatur-Schwellenwertes liegen, so kann diese über ein Heiz- oder Kühlelement reguliert werden, um möglichst konstante Temperaturbedingungen an der Außenfläche des Rohrabschnitts zu gewährleisten.

Die Temperaturkompensationseinheit leitet die detektierten Temperaturen des jeweiligen Rohrabschnitts und gegebenenfalls des Sensorelements optional an die zuvor beschriebene Steuereinheit des Messsystems weiter. Besagte Steuereinheit führt daraufhin eine Temperaturkompensation der bestimmten Dehnungsparameter vor, indem allgemein bekannte Korrekturformeln oder Lookup-Tabellen herangezogen werden, welche Materialkoeffizienten, insbesondere einen thermischen Längenausdehnungskoeffizient, des Rohrabschnitts berücksichtigen.

Zum Schutz der beiden Messvorrichtungen können diese in eine Vergussmasse eingebettet sein, um eine jeweilige Messvorrichtung vor externen Einflüssen zu schützen und dessen thermische Stabilität zu gewährleisten. Außerdem ist die Messvorrichtung aufgrund der Einbettung in die Vergussmasse wasserdicht und kann somit unter Wasser eingesetzt werden. Bei der Vergussmasse kann es sich beispielsweise um Epoxidharz, Polyurethan, Silikonelastomer oder eine anderweitige geeignete fließfähige Masse handeln.

Optional kann das Sensorelement der ersten und der zweiten Messvorrichtung dazu eingerichtet sein, Dehnungen des ersten bzw. des zweiten Rohrabschnitts über einen zeitlichen Verlauf zu detektieren, um relative Abweichungen in Bezug auf eine vordefinierte Dehnungsrate des jeweiligen Rohrabschnitts zu bestimmen. Mit anderen Worten können die auf den Dehnungen des Rohrabschnitts basierenden Dehnungsparameter über einen beliebigen Zeitraum bestimmt und mit Referenzwerten verglichen werden, um mögliche Anomalien zu detektieren. Dies ermöglicht eine Überwachung der Rohrleitung während dessen Betriebs. Die Referenzwerte können sich dabei auf Werte beziehen, welche zuvor für den ersten Rohrabschnitt unter Standardbedingungen ermittelt worden sind.

Unter Einbezug der Referenzwerte, insbesondere der materialspezifischen Eigenschaften der Rohrleitung sowie der Art bzw. Zusammensetzung und des Volumenstroms des zu transportierenden Mediums, wird bei Überschreitung des zuvor erwähnten materialspezifischen Schwellenwertes eine entsprechende Dehnung ersten Rohrabschnitts erwartet, wodurch eine für den Rohrabschnitt spezifische Dehnungsrate abgeleitet werden kann. Abweichungen von dieser bekannten Dehnungsrate während des Betriebs der Rohrleitung deuten daher auf Anomalien hin, beispielsweise bedingt durch eine Materialermüdung oder Rissbildung im jeweiligen Rohrabschnitt.

Anhand der Bestimmung der Dehnungsparameter über einen zeitlichen Verlauf können ferner Prognosen zur Lebensdauer des Rohrabschnitts und somit zur Rohrleitung erstellt werden. So wird es insbesondere ermöglicht, Materialermüdung, Risse oder Brüche des Rohrabschnitts aufgrund andauernder mechanischer Belastung vorherzusagen und den Rohrabschnitt entsprechend rechtzeitig zu warten oder auszutauschen. Dadurch kann insbesondere verhindert werden, dass ein Defekt des Rohrabschnitts während des Betriebs der Rohrleitung auftritt.

Gemäß einem zweiten Aspekt der vorliegenden Erfindung wird die oben genannte Aufgabe durch ein Verfahren zur Bestimmung eines Strömungsverhaltens eines Mediums in einer Rohrleitung gelöst, wobei das Verfahren die Schritte umfasst: a) Anbringen einer ersten Messvorrichtung an einer Außenfläche eines ersten Rohrabschnitts einer Rohrleitung; b) Anbringen einer zweiten Messvorrichtung an einer Außenfläche eines zweiten Rohrabschnitts der Rohrleitung, welcher entlang einer Strömungsrichtung des Mediums in der Rohrleitung um einen vordefinierten Abstand von dem ersten Rohrabschnitt beabstandet ist, wobei die erste Messvorrichtung und die zweite Messvorrichtung jeweils wenigstens ein Sensorelement und jeweils eine mit dem Sensorelement elektrisch gekoppelte Leiterplatte umfassen; c) Detektieren einer Dehnung des ersten Rohrabschnitts durch die erste Messvorrichtung und Detektieren einer Dehnung des zweiten Rohrabschnitts durch die zweite Messvorrichtung, wobei die jeweiligen Dehnungen durch einen Transport eines Mediums durch die Rohrleitung erzeugt werden; d) Ermitteln einer Zeitdifferenz zwischen der Dehnung des ersten Rohrabschnitts und der Dehnung des zweiten Rohrabschnitts; und e) Bestimmen eines Strömungsverhaltens des Mediums in der Rohrleitung auf Grundlage der ermittelten Zeitdifferenz, materialspezifischer Eigenschaften der Rohrleitung und vorbestimmter Eigenschaften des transportierten Mediums.

Das Verfahren gemäß dem zweiten Aspekt ist insbesondere darauf ausgelegt, das Strömungsverhalten eines Mediums einer Rohrleitung in Abhängigkeit der entsprechend den Ausführungen zum Messsystems des ersten Aspekts bestimmten Dehnungsparameter in Echtzeit zu analysieren. Die beschriebene Verfahrensschritte d) und e) sind insbesondere mittels der zuvor beschriebenen Steuereinheit durchführbar.

Es sei an dieser Stelle explizit darauf hingewiesen, dass sämtliche in Bezug auf das erfindungsgemäße Messsystem des ersten Aspekts beschriebenen Merkmale, Effekte und Vorteile auch auf das erfindungsgemäße Verfahren gemäß dem zweiten Aspekt anwendbar sein können, und umgekehrt.

Insbesondere kann das Verfahren ferner den folgenden Schritt umfassen: f) Steuern eines Volumenstroms des in der Rohrleitung transportierten Mediums in Abhängigkeit des bestimmten Strömungsverhaltens. Dies kann beispielsweise geschehen, indem ein an der Rohrleitung ausgebildetes Ventil oder eine Pumpe angesteuert wird, welche den Volumenstrom der Rohrleitung regeln. Sollten die für den ersten und den zweiten Rohrabschnitt detektierten Dehnungen über einen vordefinierten Schwellenwert ansteigen, so kann der Volumenstrom entsprechend reduziert werden, um Beschädigungen an der Rohrleitung zu vermeiden. Falls keine Dehnung oder nur eine minimale Dehnung eines Rohrabschnitts ermittelt wird, kann der Volumenstrom hingegen erhöht werden, um die Transportgeschwindigkeit des Mediums in der Rohrleitung zu steigern.

Das erfindungsgemäße Messsystem stellt ein hochpräzises, modular erweiterbares Messsystem zur Bestimmung eines Strömungsverhaltens eines Mediums innerhalb einer Rohrleitung dar. Dazu werden Dehnungen der Rohrleitung erfasst, wobei eine synchronisierte Auswertung mechanischer Dehnungsparameter erfolgt, insbesondere infolge von durch einen Volumenstrom induzierten Druckimpulsen und Pulsationswellen, ohne dass dabei ein direkter Kontakt mit dem Medium erforderlich ist. Das Messsystem ist insbesondere für sicherheitskritische und hygienisch anspruchsvolle Anwendungen in Industrie und Verfahrenstechnik ausgelegt.

Das Messsystem ermöglicht ferner eine multidirektionale Erfassung von Dehnungen, wodurch die Bestimmung einer Dehnungsrichtung insbesondere bei pulsierendem, nicht-stationärem, helikalem oder durch Scherung und Dehnung überlagertem Strömungsverhalten durchgeführt werden kann.

Darüber kann das Messsystem durch Integration zusätzlicher IoT-basierter Sensoren erweitert werden. So lassen sich beispielsweise Druck-, Strömungs- oder Vibrationssensoren aus bestehenden Rohrleitungen gezielt in die Analyse eines vorliegenden Strömungsverhaltens einbinden. Die kombinierte Sensorik bildet die Grundlage für eine präzise Korrektur des Strömungsverhaltens und eine automatisierte, modellbasierte Kompensation des Mediums auf Basis referenzierter rheologischer Eigenschaften.

Im Folgenden wird das erfindungsgemäße Messsystem in größerem Detail anhand von Ausführungsbeispielen mit Bezug auf die begleitenden Zeichnungen beschrieben. Es stellt dar:
- Figur 1: eine perspektivische Ansicht eines ersten Ausführungsbeispiels eines erfindungsgemäßen Messsystems;
- Figur 2: eine Seitenansicht des Messsystems aus Figur 1; und
- Figur 3: eine perspektivische Ansicht eines zweiten Ausführungsbeispiels eines erfindungsgemäßen Messsystems.

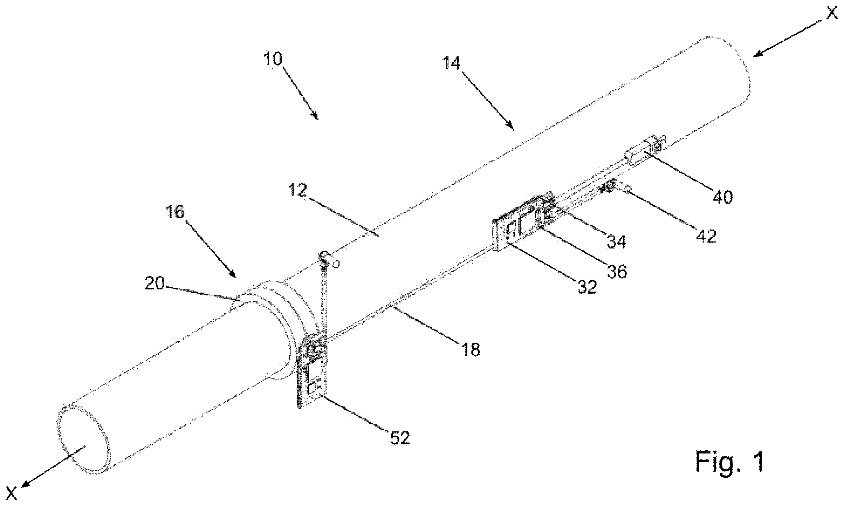

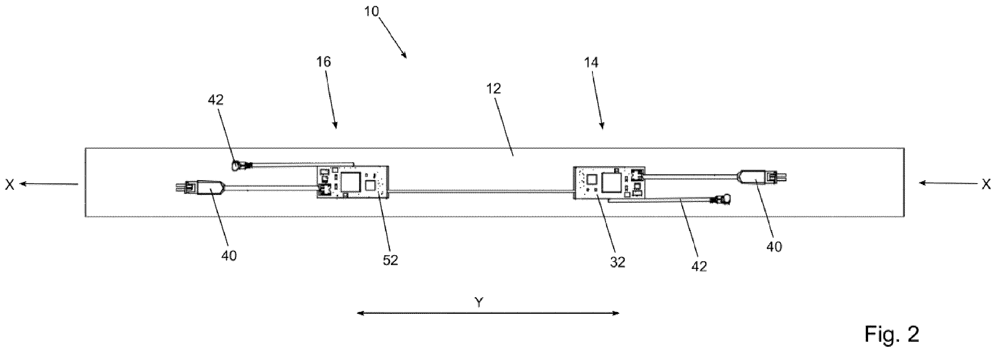

In den Figuren 1 und 2 ist in einer perspektivischen Ansicht bzw. einer Detailansicht ein erstes Ausführungsbeispiel eines erfindungsgemäßen Messsystems 10 zur Bestimmung eines Strömungsverhaltens eines Mediums in einer Rohrleitung 12 gezeigt. Die Rohrleitung 12 ist zum Transport eines nicht dargestellten Mediums eingerichtet, beispielsweise eines Fluids oder eines Feststoffs, und umfasst eine beliebige Anzahl an Rohrabschnitten. Vorliegend weist die zylindrische Rohrleitung 12 einen ersten Rohrabschnitt 14 und einen zweiten Rohrabschnitt 16 auf. An einer Außenfläche des ersten Rohrabschnitts 14 ist eine erste Messvorrichtung 32 angeordnet und an einer Außenfläche des zweiten Rohrabschnitts 16 ist eine zweite Messvorrichtung 52 angeordnet. Die beiden Messvorrichtungen 32, 52 sind über ein Kabel 18 miteinander gekoppelt.

Im gezeigten ersten Ausführungsbeispiel der Figur 1 ist die erste Messvorrichtung 32 unmittelbar auf die Außenfläche des ersten Rohrabschnitts 14 aufgeklebt, wobei auch andere Anbringungsmöglichkeiten denkbar sind. Die zweite Messvorrichtung 52 ist hingegen mittels einer Klemmeinheit 20 an dem zweiten Rohrabschnitt 16 befestigt. Die Klemmeinheit 20 ist vorliegend als Spannring ausgebildet, welcher ein einfaches Anbringen und Lösen der zweiten Messvorrichtung 52 an den bzw. von dem zweiten Rohrabschnitt 16 ermöglicht. Im Gegensatz dazu sind in Figur 2 beide Messvorrichtung 32, 52 unmittelbar an der Außenfläche eines jeweiligen Rohrabschnitts 14, 16 angeordnet.

Die beiden Messvorrichtungen 32, 52 umfassen jeweils wenigstens ein Sensorelement 34, eine mit dem Sensorelement 34 elektrisch gekoppelte Leiterplatte 36 sowie optional einen hier nicht gezeigten Beschleunigungssensor 38. Die Leiterplatte 36 weist unter anderem mehrere Messbrücken, Signal- bzw. Messverstärker, einen Analog-Digital-Wandler sowie einen Mikroprozessor auf, welcher als Verarbeitungseinheit und Speichereinheit fungiert. Der Analog-Digital-Wandler weist ferner einen Multiplexer auf, welcher zur Synchronisierung der von einer jeweiligen Messvorrichtung 32, 52 detektierten Dehnung eingerichtet ist. Dadurch kann gewünschtenfalls auf eine drahtlose oder drahtgebundene Synchronisierung mehrerer Messvorrichtungen eines Messsystems 10 verzichtet werden.

Zur Übertragung von Daten weist wenigstens eine der beiden Messvorrichtungen 32, 52, in Figur 1 die erste Messvorrichtung 32 und in Figur 2 beide Messvorrichtungen 32, 52, eine Antenne 42 auf, welche beispielsweise als BLE-Antenne ausgebildet ist. Diese Antenne 42 kann Teil einer Kommunikationseinheit der Leiterplatte 36 sein. Die Datenübertragung der zweiten Messvorrichtung 52 gemäß Darstellung in Figur 2 erfolgt über das Kabel 18 von der zweiten Messvorrichtung 52 auf die erste Messvorrichtung 32 und von dort mittels der Antenne 42 an eine externe Steuereinheit, beispielsweise einen Computer, ein Tablet oder ein Smartphone. Zur Datenübertragung können die Daten in Datenpakete segmentiert werden, wodurch eine Echtzeit-Übertragung ermöglicht wird. Vorzugsweise erfolgt sämtliche Kommunikation zwischen den Messeinrichtungen 32, 52 und der externen Steuereinheit über eine hochfrequente OTA-Verbindung.

Auch die Energieversorgung der zweiten Messvorrichtung 52 kann über das Kabel 18 erfolgen. Die erste Messvorrichtung 32 weist, wie in Figur 1 gezeigt, einen Anschluss 40 für eine externe Stromquelle auf, welcher optional mit einem Spannungsregler ausgestattet ist. Ebenfalls möglich ist es, dass beide Messvorrichtungen 32, 52 mit solch einem Anschluss 40 ausgestattet sind, wie in Figur 2 dargestellt.

Das Sensorelement 34 ist vorliegend als sogenannte DMS-Rosette ausgebildet, in welcher mehrere DMS, vorzugsweise drei DMS, in Bezug auf ein Zentrum der DMS-Rosette derart zueinander angeordnet sind, dass jeweils zwei benachbarte DMS einen Winkel zwischen 0° und 180° aufspannen. Jeder DMS erfasst die entlang seiner Haupterstreckungsrichtung auftretenden Dehnungen bzw. Querschnittsveränderungen eines Rohrabschnitts 14, 16 in unterschiedlichen Richtungen. Folglich können je nach Anordnung der DMS in der DMS-Rosette Dehnungen in verschiedenen Richtungen erfasst und ausgewertet werden.

Wird nun ein Medium, beispielsweise Warmwasser, durch die Rohrleitung 12 transportiert, so entsteht aufgrund des in der Rohrleitung 12 vorherrschenden Volumenstroms des Mediums ein spezifischer Innendruck, welcher senkrecht auf die Rohrinnenwand des ersten Rohrabschnitts 14 und bei fortschreitendem Transport des Mediums ebenso auf den zweiten Rohrabschnitt 16 wirkt. Solange dieser Innendruck unter einem materialspezifischen Schwellenwert des jeweiligen Rohrabschnitts 14, 16 liegt, erfährt der Rohrabschnitt 14, 16 keine Zustandsveränderung. Besagter materialspezifischer Schwellenwert hängt insbesondere von dem Innendurchmesser bzw. Innenradius und der Wandstärke eines Rohrabschnitts 14, 16 sowie des Elastizitätsmoduls des Materials des Rohrabschnitts 14, 16 ab.

Bei erhöhtem Volumenstrom des Mediums wirkt folglich ein erhöhter Innendruck auf die Rohrinnenwand der Rohrabschnitte 14, 16. Überschreitet dieser Innendruck nun den materialspezifischen Schwellenwert eines Rohrabschnitts 14, 16, so wird eine Querschnittsveränderung in Form einer Umfangsdehnung des Rohrabschnitts 14, 16 erzeugt, welche proportional zum Innendruck ist. Eine solche Dehnung wird von der ersten Messvorrichtung 32 und von der zweiten Messvorrichtung 52 an der Außenfläche des jeweiligen Rohrabschnitts 14, 16 erfasst und durch deren Mikroprozessoren in Dehnungsparameter umgewandelt. Dies erfolgt, indem eine auf der Leiterplatte 36 integrierte Brückenverstärkerschaltung die detektierten Dehnungen aufnimmt, mittels Analog-Digital-Wandlung digitalisiert und dabei in Dehnungsparameter umwandelt. Die Übertragung der Dehnungsparameter an die externe Steuereinheit mittels der Kommunikationseinheit bzw. der Antenne 42 erfolgt daraufhin beispielsweise via Bluetooth, WLAN, LoRaWAN oder ähnlichen Kommunikationsstandards

Da die beiden Messvorrichtungen 32, 52 mit einem vordefinierten Abstand Y, welcher in Figur 2 veranschaulicht ist, zueinander an der Rohrleitung 12 angeordnet sind, kann ein Strömungsverhalten des Mediums im Inneren der Rohrleitung 12 bestimmt werden, indem die Zeitdifferenz zwischen einem Auftreten einer Dehnung des ersten Rohrabschnitts 14 und einem Auftreten einer Dehnung des zweiten Rohrabschnitts 16 ermittelt wird. Dies erfolgt insbesondere im Rahmen einer Time-of-Flight-Analyse. Folglich ist das Messsystem dazu in der Lage, auf Grundlage der detektierten Dehnungen ein Strömungsverhalten des Mediums während dessen Transports durch die Rohrleitung zu bestimmen. Die beiden Messvorrichtungen 32, 52 können mittels der Antennen 42 über ein drahtloses Mesh-Netzwerk verbunden und synchronisiert werden. Über dieses Netzwerk können die von den Messvorrichtungen bestimmten Dehnungsparameter zeitgestempelt und zur Auswertung übertragen werden.

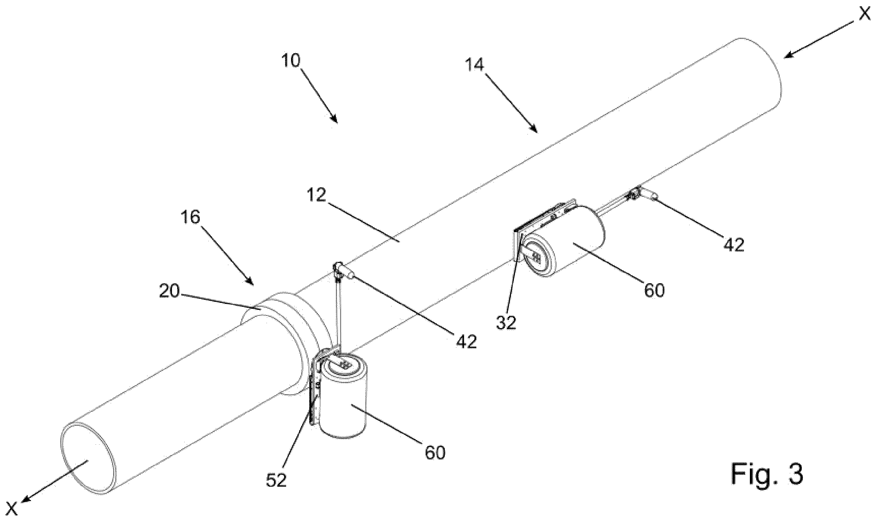

In Figur 3 ist schließlich eine perspektivische Ansicht eines zweiten Ausführungsbeispiels eines erfindungsgemäßen Messsystems 10 gezeigt. Das zweite Ausführungsbeispiel unterscheidet sich von dem ersten Ausführungsbeispiel insbesondere durch die Bereitstellung einer Batterie 60 jeweils an der ersten und der zweiten Messvorrichtung 32, 52. Die Batterie 60 dient zur Energieversorgung einer jeweiligen Messvorrichtung 32, 52. Für sämtliche weiteren Merkmale des zweiten Ausführungsbeispiels, welche identisch zu den Merkmalen des ersten Ausführungsbeispiels sind, wird an dieser Stelle auf die Ausführungen des ersten Ausführungsbeispiels verwiesen.

Die Dehnungsparameter, welche gemäß den zuvor erläuterten Prinzipien durch die erste und die zweite Messvorrichtung 32, 52 bestimmt werden, können in beiden Ausführungsbeispielen in Echtzeit an die externe Steuereinheit übermittelt werden. Die externe Steuereinheit ist dazu eingerichtet, die Deformationsparameter an einen Operateur auszugeben und den Transport des Mediums durch die Rohrleitung 12 vollautomatisch oder zumindest teilautomatisch zu steuern. Dies geschieht durch Ansteuerung eines Ventils oder einer Pumpe der Rohrleitung 12. Dementsprechend kann das Strömungsverhalten des Mediums, insbesondere dessen Strömungsgeschwindigkeit und Volumenstrom, auf Grundlage des bestimmten Strömungsverhaltens gesteuert werden.

Die Umfangsdehnungen eines zylindrischen Rohrabschnitts 14, 16 können ferner anhand folgender Gleichung abgeschätzt werden: $ε = \frac{p ⋅ r}{t ⋅ E}$ wobei ε der als Strain bzw. Microstrain durch die Messvorrichtungen 32, 52 detektierten Umfangsdehnung entspricht, und wobei *p* der Innendruck, r der Innenradius eines Rohrabschnitts 14, 16, *t* die Wandstärke eines Rohrabschnitts 14, 16 und E das Elastizitätsmodul eines Rohrabschnitts 14, 16 ist.

Die nachfolgende Tabelle zeigt die berechneten Dehnungen in Umfangsrichtung (Hoop-Strain) in Microstrain (µε) bei einem Innendruck von 0,1 bar (10 kPa) und 1 bar (100 kPa). Die Werte wurden für eine Rohrleitung 12 mit Rohrabschnitten 14, 16 mit den Nennweiten DN 10, DN 20, DN 30 und DN 40 berechnet, welche aus den Materialien Edelstahl, PTFE, Polyurethan (PU), Polyvinylchlorid (PVC) oder silikon-/glasfaserverstärktem Kunststoff hergestellt sind. Diese Annäherung erlaubt eine Abschätzung der zu erwartenden Dehnungsparameter, so dass entsprechend Sensorelemente 34 ausgewählt werden können, welche die zu erwartenden Dehnungsparameter auflösen und den entsprechenden Dehnungen über einen längeren Zeitraum standhalten können.

**Tabelle 1: Dehnungsberechnung für gängige Industrierohr-Standards (in µε)**

| *p* = 0.1 bar, *t* = 1 mm | | | | |
|---|---|---|---|---|
| Material | DN10 | DN20 | DN30 | DN40 |
| Edelstahl (*E* = 200 GPa) | 0,167 | 0,25 | 0,3 | 0,333 |
| PTFE (*E* = 0.5 GPa) | 66,67 | 100 | 120 | 133,3 |
| PU (*E* = 0.025 GPa) | 1333 | 2000 | 2400 | 2667 |
| PVC (*E* = 3 GPa) | 11,11 | 16,67 | 20 | 22,22 |
| Silikon/GF (E = 0.01 GPa) | 3333 | 5000 | 6000 | 6667 |

| *p* = 1 bar, *t* = 1 mm | | | | |
|---|---|---|---|---|
| Material | DN10 | DN20 | DN30 | DN40 |
| Edelstahl (*E* = 200 GPa) | 1,67 | 2,5 | 3 | 3,33 |
| PTFE (*E* = 0.5 GPa) | 666,7 | 1000 | 1200 | 1333 |
| PU (*E* = 0.025 GPa) | 13,333 | 20,000 | 24,000 | 26,667 |
| PVC (*E* = 3 GPa) | 11,1 | 16,7 | 20 | 22,2 |
| Silikon/GF (*E* = 0.01 GPa) | 33,333 | 50,000 | 60,000 | 66,667 |

| *p* = 1 bar, *t* = 2 mm | | | | |
|---|---|---|---|---|
| Material | DN10 (µε) | DN20 (µε) | DN30 (µε) | DN40 (µε) |
| Edelstahl (*E* = 200 GPa) | 1,2 | 2,5 | 3,8 | 5 |
| PTFE (*E* = 0.5 GPa) | 500 | 1000 | 1500 | 2000 |
| PU (*E* = 0.025 GPa) | 10 000.0 | 20 000.0 | 30 000.0 | 40 000.0 |
| PVC (*E* = 3 GPa) | 83,3 | 166,7 | 250 | 333,3 |
| Silikon/GF (*E* = 0.01 GPa) | 25 000.0 | 50 000.0 | 75 000.0 | 100000.0 |

Des Weiteren können die beiden Messvorrichtungen 32, 52 neben deren Anbringung an geraden Rohrabschnitten 14, 16 auch an anderweitigen Komponenten einer Rohrleitung 12 angeordnet werden, um Dehnungen zu detektieren. Insbesondere die Anordnung an Pumpen sei an dieser Stelle hervorgehoben, da diese im Betrieb deutlich messbare Druckpulsationen erzeugen. Die nachfolgende Tabelle zeigt eine Auswahl an Pumpen mit einer Nenngröße von DN 20 bis 30 mm, welche bei Innendrücken zwischen 1 und 10 bar folgende Druckpulsationen erzeugen:

**Tabelle 2: Druckpulsationswerte gängiger Pumpen**

| Pumpentyp | Typische Druckpulsation (mbar) |
|---|---|
| Zentrifugalpumpe | < 10 |
| Kolbenpumpe | 50 - 500 |
| Membranpumpe | 20 - 200 |
| Zahnradpumpe | 10 - 100 |
| Schraubenspindelpumpe | < 20 |
| Peristaltikpumpe | 50 - 300 |
| Turbopumpe | < 5 |
| Schlauchpumpe | 30 - 250 |
| Kreiselpumpe mit Frequenzumrichter | < 5 - 10 |
| Drehkolbenpumpe | 10 - 80 |

## Patentansprüche

1. Messsystem (10) zur Bestimmung eines Strömungsverhaltens eines Mediums in einer Rohrleitung (12), wobei das Messsystem (10) umfasst:
- wenigstens eine Rohrleitung (12), welche zum Transport eines Mediums eingerichtet ist; und
- wenigstens eine erste Messvorrichtung (32) und wenigstens eine zweite Messvorrichtung (52), welche jeweils wenigstens ein Sensorelement (34) und jeweils eine mit dem Sensorelement (34) elektrisch gekoppelte Leiterplatte (36) umfassen,
wobei die erste Messvorrichtung (32) und die zweite Messvorrichtung (52) entlang einer Strömungsrichtung (X) des Mediums in der Rohrleitung (12) um einen vordefinierten Abstand (Y) voneinander beabstandet an einer Außenfläche eines ersten Rohrabschnitts (14) bzw. eines zweiten Rohrabschnitts (16) der Rohrleitung (12) angeordnet sind,
wobei die erste Messvorrichtung (32) dazu eingerichtet ist, eine Dehnung des ersten Rohrabschnitts (14) zu detektieren,
wobei die zweite Messvorrichtung (52) dazu eingerichtet ist, eine Dehnung des zweiten Rohrabschnitts (16) zu detektieren, und
wobei das Messsystem (10) auf Grundlage der detektierten Dehnungen der ersten Messvorrichtung (32) und der zweiten Messvorrichtung (52) ein Strömungsverhalten des Mediums während dessen Transports durch die Rohrleitung (12) bestimmt.

2. Messsystem (10) nach Anspruch 1,
**dadurch gekennzeichnet, dass** das Sensorelement (34) wenigstens einen Dehnungsmessstreifen umfasst.

3. Messsystem (10) nach Anspruch 1,
**dadurch gekennzeichnet, dass** das Sensorelement (34) eine Mehrzahl von Dehnungsmessstreifen, vorzugsweise drei Dehnungsmessstreifen, umfasst,
wobei die Dehnungsmessstreifen der Mehrzahl von Dehnungsmessstreifen derart in dem Sensorelement (34) angeordnet sind, dass jeweils zwei benachbarte Dehnungsmessstreifen in Bezug auf deren Haupterstreckungsrichtungen einen Winkel zueinander aufspannen, um Dehnungen eines jeweiligen Rohrabschnitts (14, 16) in voneinander unterschiedlichen Richtungen gemäß den Haupterstreckungsrichtungen der Dehnungsmessstreifen zu detektieren.

4. Messsystem (10) nach einem der vorhergehenden Ansprüche,
**dadurch gekennzeichnet, dass** die erste Messvorrichtung (32) anhand vordefinierter Druckwerte und auf Grundlage materialspezifischer Eigenschaften eines jeweiligen Rohrabschnitts (14, 16) kalibriert ist.

5. Messsystem (10) nach einem der vorhergehenden Ansprüche,
**dadurch gekennzeichnet, dass** vor der Anbringung einer Messvorrichtung (32, 52) an einer Außenfläche eines jeweiligen Rohrabschnitts (14, 16) eine Analyse durchgeführt wird, um eine für die Anbringung der jeweiligen Messvorrichtung (32, 52) geeignete Position an der Rohrleitung (12) zu bestimmen.

6. Messsystem (10) nach einem der vorhergehenden Ansprüche,
**dadurch gekennzeichnet, dass** die erste Messvorrichtung (32) und die zweite Messvorrichtung (52) über eine Drahtverbindung (18) gekoppelt sind.

7. Messsystem (10) nach einem der vorhergehenden Ansprüche,
**dadurch gekennzeichnet, dass** die erste Messvorrichtung (32) und/oder die zweite Messvorrichtung (52) ferner einen Beschleunigungssensor und/oder einen Temperatursensor umfassen.

8. Messsystem nach einem der vorhergehenden Ansprüche,
**dadurch gekennzeichnet, dass** die erste Messvorrichtung (32) und/oder die zweite Messvorrichtung (52) Mittel zur autarken Energieversorgung aufweisen.

9. Messsystem (10) nach einem der vorhergehenden Ansprüche,
**dadurch gekennzeichnet, dass** die erste Messvorrichtung (32) und/oder die zweite Messvorrichtung (52) in jeweils einem Gehäuse ausgebildet sind,
wobei das Gehäuse dazu eingerichtet ist, eine Dehnung der jeweiligen Messvorrichtung (32, 52), welche diese aufgrund einer Dehnung des ersten Rohrabschnitts (14) bzw. des zweiten Rohrabschnitts (16) erfährt, auf einen vordefinierten Maximalwert zu begrenzen.

10. Messsystem (10) nach einem der vorhergehenden Ansprüche und gegebenenfalls nach Anspruch 6,
**dadurch gekennzeichnet, dass** die erste Messvorrichtung (32) und/oder die zweite Messvorrichtung (52) ferner umfassen:
- eine Verarbeitungseinheit zur Verarbeitung von Dehnungsparametern, welche durch die Messvorrichtungen (32, 52) bestimmt worden sind;
- eine Speichereinheit, welche dazu eingerichtet ist, die bestimmten Dehnungsparameter abzuspeichern; und
- eine Kommunikationseinheit zum, insbesondere drahtlosen, Übertragen der Dehnungsparameter an eine externe Steuereinheit.

11. Messsystem (10) nach einem der vorhergehenden Ansprüche,
**dadurch gekennzeichnet, dass** das Messsystem (10) ferner eine Steuereinheit umfasst, welche dazu eingerichtet ist, durch die Messvorrichtungen (32, 52) bestimmte Dehnungsparameter auf Grundlage rheologischer Referenzwerte des transportierten Mediums anzupassen.

12. Messsystem (10) nach einem der vorhergehenden Ansprüche,
**dadurch gekennzeichnet, dass** das Messsystem (10) ferner eine Einheit zum maschinellen Lernen umfasst, welche eingerichtet ist zum:
- Erfassen von Daten auf Grundlage von Dehnungsparametern des ersten Rohrabschnitts (14) und/oder des zweiten Rohrabschnitts (16), welche durch eine jeweilige Messvorrichtung (32, 52) detektiert worden sind, materialspezifischer Eigenschaften des ersten Rohrabschnitts (14) und/oder des zweiten Rohrabschnitts (16) sowie vorbestimmter Eigenschaften des transportierten Mediums;
- Umwandeln der erfassten Daten in Training-Datensets;
- Erstellen einer Prognose zum Strömungsverhalten des Mediums in der Rohrleitung (12) auf Grundlage der Training-Datensets; und
- Identifizieren von Abweichungen des bestimmten Strömungsverhaltens von einem auf Grundlage der Training-Datensets zu erwartenden Strömungsverhalten.

13. Messsystem (10) nach einem der vorhergehenden Ansprüche,
**dadurch gekennzeichnet, dass** eine Mehrzahl von Messvorrichtungen (32, 52) in vordefinierten Abständen entlang der Strömungsrichtung (X) des Mediums an der Rohrleitung (12) angeordnet sind, um sich entlang der Strömungsrichtung des Mediums fortbewegende Druckpulsationen zu detektieren.

14. Verfahren zur Bestimmung eines Strömungsverhaltens eines Mediums in einer Rohrleitung (12), wobei das Verfahren die Schritte umfasst:
a) Anbringen einer ersten Messvorrichtung (32) an einer Außenfläche eines ersten Rohrabschnitts (14) einer Rohrleitung (12);
b) Anbringen einer zweiten Messvorrichtung (52) an einer Außenfläche eines zweiten Rohrabschnitts (16) der Rohrleitung (12), welcher entlang einer Strömungsrichtung (X) des Mediums in der Rohrleitung (12) um einen vordefinierten Abstand (Y) von dem ersten Rohrabschnitt (14) beabstandet ist,
wobei die erste Messvorrichtung (32) und die zweite Messvorrichtung (52) jeweils wenigstens ein Sensorelement (34) und jeweils eine mit dem Sensorelement (34) elektrisch gekoppelte Leiterplatte (36) umfassen;
c) Detektieren einer Dehnung des ersten Rohrabschnitts (14) durch die erste Messvorrichtung (32) und Detektieren einer Dehnung des zweiten Rohrabschnitts (16) durch die zweite Messvorrichtung (52), wobei die jeweiligen Dehnungen durch einen Transport eines Mediums durch die Rohrleitung (12) erzeugt werden;
d) Ermitteln einer Zeitdifferenz zwischen der Dehnung des ersten Rohrabschnitts (14) und der Dehnung des zweiten Rohrabschnitts (16); und
e) Bestimmen eines Strömungsverhaltens des Mediums in der Rohrleitung (12) auf Grundlage der ermittelten Zeitdifferenz, materialspezifischer Eigenschaften der Rohrleitung (12) und vorbestimmter Eigenschaften des transportierten Mediums.

15. Verfahren nach Anspruch 14,
**dadurch gekennzeichnet, dass** das Verfahren ferner den Schritt umfasst:
f) Steuern eines Volumenstroms des in der Rohrleitung (12) transportierten Mediums in Abhängigkeit des bestimmten Strömungsverhaltens.
